# EUROPÄISCHE PATENTSCHRIFT

(11) **EP 0 939 112 B1**
(45) Veröffentlichungstag und Bekanntmachung des Hinweises auf die Patenterteilung: **30.07.2003**
(21) Anmeldenummer: 99102944.8
(22) Anmeldetag: 13.02.1999
(51) Int. Cl.: C09J 5/00

(54) **Verfahren zum Bearbeiten, insbesondere Lackieren eines Sandwich**
Method for processing, in particular varnishing a sandwich
procédé pour traiter, en particulier pour vernir un sandwich

(30) Priorität: 27.02.1998 DE 19808287
(43) Veröffentlichungstag der Anmeldung: 01.09.1999
(73) Patentinhaber: Tesa AG, 20253 Hamburg (DE)
(72) Erfinder: Schlattmann Edda, 49324 Melle (DE)

(56) Entgegenhaltungen:
- WO-A-92/11333
- DE-A- 3 331 016
- DE-A- 4 217 771

## Beschreibung

Die Erfindung betrifft ein Verfahren zum Bearbeiten, insbesondere Lackieren eines Sandwich, bei dem mindestens zwei Fügeteile unter Ausbildung einer Abstandsfuge reversibel fixiert werden.

Für die Bearbeitung, insbesondere für die Lackierung sind diverse Hilfsmittel bekannt, um die einzelnen Teile während der Prozedur zu fixieren, zu schützen oder abzudecken.

So sind etwa selbstklebende Abdeckbänder im Handel, um nicht zu lackierende Flächen zu schützen, mit dem Nachteil scharfer Lackkanten beim Übergang von unlackierten zu neulackierten Bereichen.

Runde Schaumstoffstreifen gemäß **US 5,260,097** sind hierzu als Verbesserung vorgeschlagen worden, die beim Sprüh-Lackieren dazu führen sollen, daß "the border forming the transition between the cushin which has just been removed and the treated surface can no longer be seen" (Sp. 5, Z. 59-61). Eine Fixierhilfe oder dergleichen ist mit einer solchen Anordnung jedoch nicht möglich.

Aus **DE 86 07 368 U1** ist ein Abdeckband insbesondere aus geschäumtem Material bekannt, das mittels einer überstehenden Lippe den Sprühnebel beim Lackieren so leitet, daß dies "zu einem gleichmäßigen, d.h. stufenlosen Übergang zwischen alter und neuer Lackschicht führt "(S. 1, Z. 9/10 v.u.). Eine weitere Selbstklebemasse kann dabei auf der Oberseite angeordnet sein, um darauf großflächiges Abdeckmaterial anzubringen. Auch hier ist eine Fixierung von weiteren Fügeteilen nicht oder nur unzulänglich möglich.

Um aber fest fixierte Fügeteile so zu bearbeiten, insbesondere zu lackieren, daß über eine Abstandsfuge in den daran angrenzenden Randbereichen übergangsfreie Bearbeitungsergebnisse erzielt werden, bedarf es einer aufwendigen Fixierung etwa mittels Schrauben, Schraubzwingen, Schraubstöcken oder Klammern, die aufwendig und zudem umständlich nach erfolgter Bearbeitung wieder zu entfernen sind. Eine elegante Lösung für derartige Probleme ist offen.

Aufgabe der Erfindung war es, hier Abhilfe zu schaffen, insbesondere eine reversible Fixierung für Fügeteile mit einer Abstandsfuge zu schaffen, die z.B. beim Sprüh-Lackieren eine übergangslose "Lackkante" ergibt, die nicht nachgearbeitet werden muß.

Gelöst wird dies durch einen Sandwich, wie er im einzelnen in den Ansprüchen näher gekennzeichnet ist.

Als Klebfolie eignen sich insbesondere solche entsprechend **DE 33 31 016, DE 42 22 849, DE 42 33 872, WO 92/11333** und **WO 94/21157.**

So beschreibt **DE 33 32 016 A1** eine Klebfolie für wiederlösbare Klebbindungen, die es gestattet, daß eine damit hergestellte Klebbindung durch Ziehen an der Klebfolie in Richtung der Verklebungsebene lösbar ist. Mit solchen Klebfolien lassen sich hohe Klebkräfte und Scherfestigkeiten erzielen und Klebverbunde ohne weitere Hilfsmittel wieder lösen, vergleichbar dem Öffnen eines Weckglases, ähnlich wie dort die Gummidichtung am Anfasser aus der Dichtungsfuge gezogen wird.

DE **42 22 849 C1** beschreibt eine derartige Klebfolie mit einem UV-durchlässigen Anfasser.

Auch WO **92/11333** beschreibt unter anderem Klebfolien für entsprechende Anwendungen, wobei die eingesetzten Klebfolien eine geringe Elastizität bei gleichzeitig hoher Dehnung aufweisen.

Auch doppelseitige Selbstklebebänder mit Schaumstoff-Zwischenträger, z.B. aus Polyethylen-Schaum, lassen sich erfindungsgemäß einsetzen.

Generell sei zu Herstellung, Verarbeitung und Handhabung von den besonders bevorzugten Klebfolien auf **DE 33 31 016, DE 42 22 849** und **WO 92/11333** verwiesen.

Als Fügeteile eignen sich solche aus z.B. Holz, Kunststoff, Metall, Keramik, Porzellan, Glas oder dergleichen, etwa aufeinander abgestimmte Bauteile, wie ein hölzernes Türblatt mit Aufsatz für ein später einzusetzendes Fenster. Eine solche Tür kann erfindungsgemäß besonders vorteilhaft zusammen mit diesem Aufsatz lackiert werden, wobei der Aufsatz mittels tesa-power-strips® in Form von Klebfolienstreifen (55 mm lang, 20 mm breit, 70 µm dick, mit 15 mm langen Anfasser) auf das Türblatt geklebt und der Sandwich dann in an sich bekannter Weise sprühlackiert wird. Nach Trocknen/Aushärten des Lacks wird die Klebfolie abgestrippt und die Fügeteile sind unbeschädigt und ohne jede Nachbehandlung verwendbar.

Besonders vorteilhaft ist auch, daß der lackierte bzw. bearbeitete Sandwich leicht und ohne überflüssiges Gewicht bzw. sperrige Hilfsanordnungen transportiert werden kann, um dann bei Bedarf am geeigneten Ort zerlegt zu werden.

Als geeignet haben sich insbesondere die obigen tesa-power-strips® erwiesen, aber auch längere derartige Produkte, die über die gesamte Länge der zu bearbeitenden Fügeteile sich erstrecken, während Anfasser insbesondere an solchen Stellen überstehen. die später nicht sichtbar in der Konstruktion ohnehin verschwinden.

Geeignet ist ein erfindungsgemäßer Sandwich nicht nur für Sprüh-Lackieren, sondern auch allgemein für Beschichtungen, etwa Pulver-Beschichtung, insbesondere Pulver-Lackierung, aber auch anderweitige Oberflächenbearbeitung wie Sandstrahlen oder dergleichen.

Sind größere Dicken der Klebfolien und damit der Abstandsfuge erwünscht, so können entsprechend dickere derartige Klebfolien eingesetzt werden oder es können auch die im Handel erhältlichen tesa-power-Strips® mehrfach übereinander gelegt werden. Insbesondere aber kommen für dickere Abstandsfugen Klebfolien mit geschäumtem Träger in Betracht wie oben beschrieben.

## Patentansprüche

1. Verfahren zum Bearbeiten eines Sandwich, **dadurch gekennzeichnet, dass** zwei oder mehrere Fügeteile, welche
a) unter Ausbildung einer Abstandsfuge zwischen den Fügeteilen fixiert werden, wobei
b) die Fixierung der Fügeteile mittels einer durch Ziehen in Richtung der Verklebungsebene wieder lösbaren Klebefolie erfolgt und
c) die Dicke der Abstandsfuge zwischen den Fügeteilen durch die Dicke der Klebfolie bestimmt wird, worauf
d) der so fixierte rohe Sandwich in dieser Form bearbeitet wird und dann
e) die bearbeiteten Fügeteile durch Ziehen an der Klebfolie in Richtung der Verklebungsebene rückstandslos und beschädigungslos voneinander getrennt werden.

2. Verfahren nach Anspruch 1, **dadurch gekennzeichnet, dass**
als Klebfolie eine solche eingesetzt wird, die mit oder ohne Zwischenträger elastisch oder plastisch dehnbar ist.

3. Verfahren nach zumindest einem der vorangehenden Ansprüche, **dadurch gekennzeichnet, dass**
als Klebfolie eine solche eingesetzt wird, deren Adhäsion geringer als die Kohäsion ist, deren Haftvermögen beim Dehnen weitgehend verschwindet, und deren Verhältnis von Abzugskraft zu Reißlast mindestens 1 : 1,5 ist, wobei die Klebfolie eine solche auf Basis von thermoplastischem Kautschuk und klebrigmachenden Harzen ist, mit hoher Elastizität und geringer Plastizität.

4. Verfahren nach zumindest einem der vorangehenden Ansprüche, **dadurch gekennzeichnet, dass**
als Klebfolie eine solche eingesetzt wird, die ein als Anfasser ausgebildetes Ende aufweist, das beidseits mit einer Abdeckung versehen ist oder nicht klebrig ausgerüstet ist.

5. Verfahren nach zumindest einem der vorangehenden Ansprüche, **dadurch gekennzeichnet, dass** eine Klebfolie mit einer Dicke von 60 - 2600 µm, insbesondere 70 - 1000 µm eingesetzt wird.

## Claims

1. Process for treating a sandwich, **characterized in that** two or more joined parts, which [sic]
a) are fixed with the formation of a spaced joint between the joined parts, where
b) fixing of the parts to be joined takes place by means of an adhesive film which can be detached again by pulling in the direction of the bond plane, and
c) the thickness of the spaced joint between the joined parts is determined by the thickness of the adhesive film, whereupon
d) the untreated sandwich fixed in this way is treated in this form, and then
e) the treated joined parts are separated from one another without residue or damage by pulling on the adhesive film in the direction of the bond plane.

2. Process according to Claim 1, **characterized in that** the adhesive film employed is one which with or without middle support is elastically or plastically extensible.

3. Process according to at least one of the preceding claims, **characterized in that** the adhesive film employed is one in which the adhesion is lower than the cohesion, in which the adhesion largely disappears on extension, and in which the ratio of peel force to tear load is at least 1:1.5, the adhesive film being based on thermoplastic rubber and tackifier resins and having high elasticity and low plasticity.

4. Process according to at least one of the preceding claims, **characterized in that** the adhesive film employed is one which has an end which is designed as a grip tab and which on both sides is provided with a covering or has a non-tacky finish.

5. Process according to at least one of the preceding claims, **characterized in that** an adhesive film having a thickness of 60-2600 µm, in particular 70-1000 µm, is employed.

## Revendications

1. Procédé pour le traitement d'un sandwich, **caractérisé par** deux ou plusieurs pièces jointives,
a) qui sont fixées entre les pièces jointives en formant un joint d'écartement,
b) la fixation des pièces jointives s'effectuant au moyen d'une feuille adhésive qui peut être de nouveau libérée par traction en direction du plan de collage, et
c) l'épaisseur du joint d'écartement entre les pièces jointives étant déterminée par l'épaisseur de la feuille adhésive, suite à quoi
d) le sandwich brut ainsi fixé peut être traité sous cette forme et ensuite
e) les pièces jointives traitées peuvent être séparées l'une de l'autre sans laisser de résidu et de dommage en tirant sur la feuille adhésive en direction du plan de collage.

2. Procédé selon la revendication 1, **caractérisé en ce que** comme feuille adhésive, on utilise une feuille adhésive qui est extensible élastiquement ou plastiquement, avec ou sans support intermédiaire.

3. Procédé selon au moins l'une des revendications précédentes, **caractérisé en ce que** comme feuille adhésive, on utilise une feuille adhésive dont l'adhérence est inférieure à la cohésion, dont la capacité d'adhérence disparaît largement lors de l'allongement et dont le rapport entre la force de traction et la charge de déchirure est d'au moins 1:1,5, la feuille adhésive étant une feuille adhésive à base de caoutchouc thermoplastique et de résines d'adhérence, à élasticité élevée et faible plasticité.

4. Procédé selon au moins l'une des revendications précédentes, **caractérisé en ce que** comme feuille adhésive, on utilise une feuille adhésive qui présente une extrémité configurée comme appendice de saisie qui est doté sur ses deux faces d'un recouvrement ou qui n'est pas adhésif.

5. Procédé selon au moins l'une des revendications précédentes, **caractérisé en ce que** l'on utilise une feuille adhésive d'une épaisseur de 60 à 2 600 µm, et en particulier de 70 à 1 000 µm.
